Europäisches Patentamt

European Patent Office

Office européen des brevets

(11) Publication number: **0 153 186**
A2

# EUROPEAN PATENT APPLICATION

(21) Application number: 85301100.5

(22) Date of filing: **19.02.85**

(51) Int. Cl.⁴: **G 09 F 3/02,** G 09 F 3/10

(30) Priority: **20.02.84 GB 8404388**

(43) Date of publication of application: **28.08.85**
**Bulletin 85/35**

(84) Designated Contracting States: **AT BE CH DE FR GB IT LI LU NL SE**

(71) Applicant: **Instance, David John, Past Heap Farm Pembury, Tunbridge Wells Kent (GB)**

(72) Inventor: **Instance, David John, Past Heap Farm Pembury, Tunbridge Wells Kent (GB)**

(74) Representative: **Pendlebury, Anthony et al, Page, White & Farrer 5 Plough Place New Fetter Lane, London EC4A 1HY (GB)**

(54) **Labels and manufacture thereof.**

(57) A label comprising a laminate of two layers of paper being adhered together by a layer of adhesive and a layer of a varnish, whereby the two paper layers can be separated by pulling apart the label at the adhesive/varnish interface.

The invention also includes a method for making such a label.

LABELS AND MANUFACTURE THEREOF

The present invention relates to labels and manufacture thereof and in particular to self-adhesive labels to be attached to a container such as a box, pocket, bottle or tin.

A known self-adhesive label comprises a three-layered structure consisting of a base layer of paper the lower surface of which is self adhesive, a middle layer of a polypropylene or polyethylene sheet and a top layer of paper. Each side of the middle layer is adhered to the respective paper layer by an adhesive but one side of the middle layer is treated so that it accepts adhesive more readily than the other side and so is adhered more strongly to the respective paper layer than the other side. When the top layer is pulled from the base layer, the adhesive contact between the untreated side of the middle layer and the respective adhesive layer is broken. The top layer can be separated cleanly from the base layer thereby to reveal printed information in the top surface of the base layer.

A disadvantage with this type of label is that it is inconvenient and relatively expensive to manufacture since a relatively large number of process steps are involved. First, an adhesive layer must be applied to the base layer, the middle layer is placed over the adhesive layer and adhered to the base layer; then a second layer of adhesive is applied to the middle layer and finally the top layer is placed over the second adhesive layer and adhered to the middle layer.

The present invention relates to an improved label which is relatively easy and inexpensive to manufacture and can be manufactured in a continuous process.

Accordingly, the present invention provides a label comprising a laminate of two layers of paper being adhered together by a layer of adhesive and a layer of varnish, whereby the two paper layers can be separated by pulling apart the label at the adhesive/varnish interface.

The present invention further provides a method of making a succession of self-adhesive labels on a length of release backing material, the method comprising the steps of:-

(a) providing a first web comprising a layer of self-adhesive paper on a release backing material;

(b) providing a second web composed of paper;

(c) coating either the surface of the self-adhesive paper or a surface of the second web with a layer of a varnish;

(d) applying a layer of adhesive either to the layer of varnish or to a surface of the second web, or the surface of the self-adhesive paper, when the self-adhesive paper, or the second web, respectively, is coated with varnish as aforesaid;

(e) pressing and adhering the two webs together to form a laminate, of the second web and the layer of self-adhesive paper, which is adhered together by the adhesive layer and the varnish layer whereby the two paper layers can be separated at the adhesive/varnish interface by pulling apart two paper layers;

(f) cutting through the second web and the layer of self-adhesive paper as far as the release material thereby to form the required labels; and

(g) removing the unwanted portions of the second web and the layer of self-adhesive paper adhered thereto from the release material.

An embodiment of the present invention will now be described by way of example with reference to the accompanying drawings, in which:-

Figure 1 is a plan view of a number of labels in accordance with the invention when carried in succession on a length of a release backing material;

Figure 2 is a sectional view on line A-A of Figure 1 of the labels and backing material;

Figure 3 is a sectional view of one of the labels of Figure 1 when mounted on a container and being separated manually; and

Figure 4 is a schematic illustration of an apparatus for use in making the labels and backing material of Figure 1.

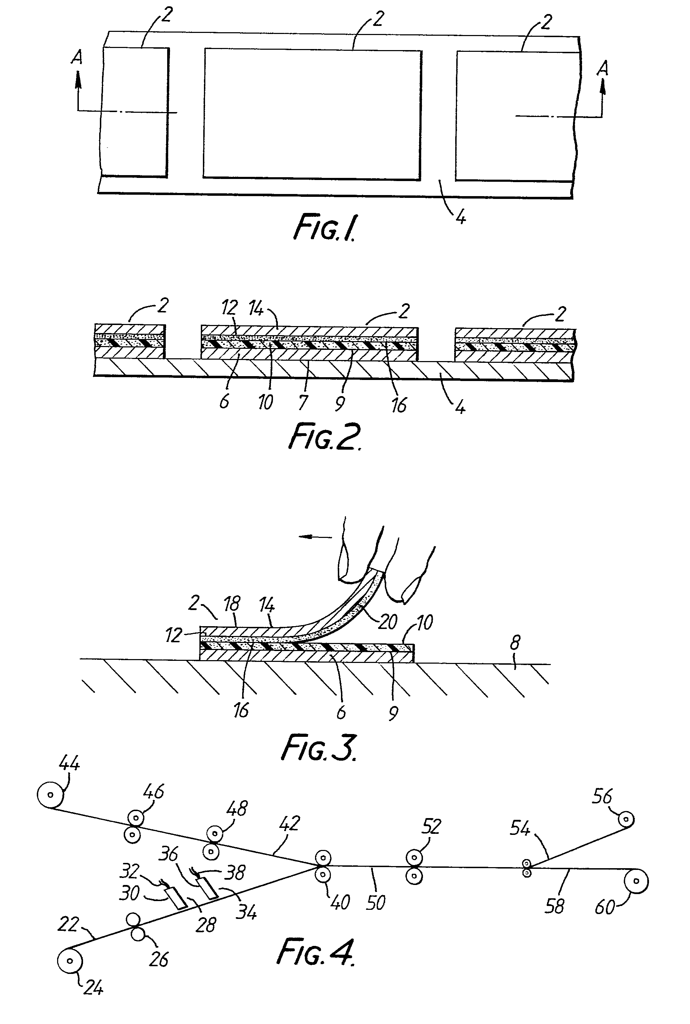

Referring to Figures 1 and 2, a number of labels 2 are carried in succession on a length of a release backing material 4.

Each label 2 has a lower layer 6 which is composed of paper. The lower surface 7 of the layer 6 is coated with a layer of pressure-sensitive adhesive so that it is self-adhesive and by means of which adhesive the lower layer 6 is attached to the release backing material 4 and to a container 8 to which the label is to be applied. The upper surface 9 of lower layer 6 is coated with a layer 10 of a varnish. The varnish layer 10 adheres itself to the lower layer 6.

In this specification, the varnish layer may, for example, be composed of a material which renders the paper of the label hydrophobic. A particularly preferred varnish is a polysiloxane such as polysiloxane manufactured under the code name WS70M and US78L by Wacker and sold in Great Britain by Ambersil Limited, Basingstoke, Hants. as Silicone Fluid F100.

Over the varnish layer 10 is disposed a layer 12 of adhesive, such as a water-soluble adhesive. A top layer 14 of paper is positioned over the adhesive layer 12 and is adhered to the varnish layer 10 by the adhesive layer 12. The lower layer 6 and the top layer 14 are superposed and co-extensive in the label 2.

Preferably the adhesive layer 12 consists of a water - borne pressure sensitive adhesive, such as an acrylic copolymer pressure sensitive adhesive. A particularly preferable adhesive is an adhesive sold by National Adhesives, of Slough, Berkshire, United Kingdom, under the trade name Nacor 360.

In accordance with the preferred embodiment of the invention, the material which renders the paper of the label hydrophobic consists of a mixture of a polysiloxane, such as that described above, and an overprinting varnish of the type which is in common use in the printing industry. An example of such a varnish is an overprinting varnish made

0153186

by Fishburn and having the code name XF 05546.  Preferably, the mixture contains from 90 to 99.5 vol % polysiloxane and from 0.5 to 10 vol % overprinting varnish, the percentage values being based on the total volume of the mixture.

The types of varnish and adhesive selected are such that the varnish and the adhesive each adhere relatively strongly to their respective paper surfaces whereas the varnish and the adhesive adhere relatively weakly to each other.  Consequently, when the top layer 14 is pulled away from the lower layer 6 in a manner shown in Figure 3, the adhesive/varnish interface 16 is gradually broken thereby to allow a "clean" separation between the adhesive/varnish layers 10, 12.  The label 2 may be separated into two portions, a torn-away portion consisting of top layer 14 and adhesive layer 11 and an attached portion consisting of lower layer 6 and varnish layer 10.

The upper surface 18 of the top layer 14 is printed with a desired image, if desired a lithographically printed image.

The upper surface 9 of lower layer 6 and/or the lower surface 20 of top layer 14 may be printed with a desired image.  When the label 2 is attached to a container in use, prior to the separation of the label 2 the image on the upper surface 18 is visible.  After separation, the image or images on upper surface 9 and lower surface 20 can be seen, thereby to reveal previously concealed information.

In this specification, the term "printing" is to be construed in its broadest sense to include printing process such as, for example, gravure, lithography, letterpress, flexography and screen printing.

It will be readily apparent to those skilled in the art that the varnish layer could be applied to the lower surface of the top layer and that the adhesive layer could be applied to the upper surface of the lower layer. It will also be apparent that the dimensions of the layers can be varied as desired.

A preferred method of making the labels of Figures 1 to 3 will now be described with reference to Figure 4.

A two-ply support web 22 comprising a layer of self-adhesive paper on a layer of release backing material is fed from a supply reel 24 to a first print station 26 at which the upper surface of the self-adhesive paper is printed with a desired image. If preferred, the paper is printed along its length with a succession of desired images. The print station 26 can include a pair of cylindrical rollers, one being a print roller and the other being an impression roller. The printed support web 22 is then fed to a varnish applying station 28 at which the printed surface of the paper is coated with a layer of varnish. The varnish applying station 28 includes a varnish applicator 30 to which varnish is fed from a varnish reservoir (not shown) <u>via</u> a conduit 32. The varnished support web 22 is then fed to an adhesive applying station 34 at which adhesive is applied to the varnished surface. The adhesive is applied either as a continuous layer or as a plurality of spaced beads disposed along the length of the support web. The adhesive applying station 34 includes an adhesive applicator 36 to which adhesive is fed from an adhesive reservoir (not shown) <u>via</u> a conduit 38. The support web is then fed to a pair of nip rollers 40.

A web of paper 42 is fed from a second supply reel 44 to second and third printing stations 46,48 at each of which a respective side of the the paper web 42 is printed with a desired image. If preferred, each side of the paper web 42 is printed along its length with a succession of desired images, with the images on the opposing sides being in registration with each other. Each of the second and third printing stations 46,48 can include a pair of cylindrical rollers, one being a print roller and the other being an impression roller.  The printed
paper web 42 is then fed to the pair of nip rollers 40.

The nip rollers 40 press together the two webs 22,42 so that they are
adhered together by the adhesive.  When beads of adhesive have been
applied to the varnish layer, the pressure applied by the nip rollers
squeezes the beads so that they form a continuous layer of adhesive.

In an alternative arrangement, adhesive could be applied to the lower
surface of web 42 instead of onto the varnish layer on the support web
22.

In a further arrangement, varnish could be applied to the lower surface
of web 42 and adhesive could be applied either onto that surface or
directly onto the upper surface of support web 22.

The apparatus may be arranged so that the two webs 22,42 are adhered
together with the longitudinal alignment of the two webs 22,42 being
such that the succession of images printed on the self-adhesive paper
of the support web 22 is in registration with the succession of images
printed on both sides of the paper web 42.  Thus, in the combined web
50 there is a row of groups of three superposed printed images.

The combined web is then fed to a die-cutting station 52 comprising a
pair of die-cutting  rollers.  At the die cutting station the
individual labels are cut out by cutting through the paper/adhesive/
varnish/paper laminate as far as the release backing material.  After
the die-cutting step, the combined web 52 has a row of cut-out labels
with the labels being surrounded by a length of the unwanted laminate.

The length of the unwanted laminate 54 is removed from the release
backing material and is wound up onto a reel 56.  The release backing
material 58 carrying  in succession the cut-out labels is wound onto a further reel 60. The release backing material and labels are as shown in Figures 1 and 2.

The preferred labels of the present invention have particular applicability in the marketing and advertising fields. The labels can be applied to product containers to advertise special offers, competitions etc. and for other applications where it is desirable to have a manually separable label which originally conceals textual information.

When the top layer 14 of the label 2 bears on its upper surface 18 a lithographically printed image, the label is not made by the apparatus and method which are described with referece to Figure 4, since the top layer 14 must be applied as an individual sheet bearing a lithographically printed image rather than as a web. The label 2 having the lithographically printed image may however be made by the method and apparatus which are disclosed in my British Patent Specification No. 2122968 published on 25th January 1984 the disclosures of which are incorporated herein by reference. Each of the individual lithographically printed sheets to constitute top layer 14 has the varnish layer 12 of hydrophobic material applied thereto to prior to being adhered to lower layer 6. The support web (which is to constitute lower layer 6 of the labels 2) to which the individual lithographically printed sheets are adhered is coated with an adhesive and then the lithographically printed sheets are applied in succession to the adhesive.

The individual labels are then cut out on the release backing material as described in that specification.

CLAIMS:

1.    A label comprising a laminate of two layers of paper being
adhered together by a layer of adhesive and a layer of a varnish,
whereby the two paper layers can be separted by pulling apart the label
at the adhesive/varnish interface.

2.    A label according to Claim 1, wherein one or both of the two
opposed inner paper surfaces is or are printed with a respective
desired image.

3.    A label according to Claim 1 or Claim 2, wherein the varnish is a
polysiloxane.

4.    A label according to any foregoing Claim, wherein one of the
outer surfaces of the label is printed with a desired image and the
other outer surface is self-adhesive.

5.    A label according to Claim 4, wherein the varnish layer is
disposed on the inner surface of that layer of paper which has the
self-adhesive outer surface.

6.    A reel of release backing material carrying thereon a succession
of labels as claimed in any foregoing Claim.

7.    A method of making a succession of self-adhesive labels on a
length of release backing material, the method comprising the steps of:-
        (a) providing a first web comprising a layer of self-adhesive
paper on a release backing material;
        (b) providing a second web composed of paper;
        (c) coating either the surface of the self-adhesive paper or a
surface of the second web with a layer of a varnish;

(d) applying a layer of adhesive either to the layer of varnish or to a surface of the second web, or the surface of the self-adhesive paper, when the self-adhesive paper, or the second web, respectively, is coated with varnish as aforesaid;

(e) pressing and adhering the two webs together to form a laminate, of the second web and the layer of self-adhesive paper, which is adhered together by the adhesive layer and the varnish layer whereby the two paper layers can be separated at the adhesive/varnish interface by pulling apart two paper layers;

(f) cutting through the second web and the layer of self-adhesive paper as far as the release material thereby to form the required labels; and

(g) removing the unwanted portions of the second web and the layer of self-adhesive paper adhered thereto from the release material.

8.    A method according to Claim 7, wherein the varnish is a polysiloxane.

9.    A method according to Claim 7 or Claim 8, wherein prior to the coating in step (c) one or both of the surfaces of the second web is or are printed with a succession of respective desired images.

10.    A method according to any one of Claims 7 to 9, wherein prior to the step of coating in step (c) the surface of the layer of self adhesive paper is printed with a succession of respective desired images.

11.    A method according to Claim 10 when appendent on Claim 9, wherein prior to the step of pressing and adhering in step (e) the two webs are aligned longitudinally so that the said successions of desired images are in registration.

12.    A method according to Claim 12, wherein during the step of cutting in step (f) the labels are cut out in registration with the said successions of desired images.

Fig.1.

Fig.2.

Fig.3.

Fig.4.